# EUROPEAN PATENT SPECIFICATION

(11) **EP 2 617 908 B1**
(45) Date of publication and mention of the grant of the patent: **11.07.2018**
(21) Application number: 13151301.2
(22) Date of filing: 15.01.2013
(51) Int. Cl.: E03F 5/04, F16B 5/02, F16B 7/06

(54) **DEVICE FOR HEIGHT ADJUSTMENT OF A SHOWER DRAIN OR A GUTTER**
Vorrichtung zur Höhenverstellung eines Dusch- oder Rinnenablaufs
Dispositif d'ajustement de hauteur pour drain de douche ou de rigole

(30) Priority: 20.01.2012 NL 2008156
(43) Date of publication of application: 24.07.2013
(73) Proprietor: Easy Sanitary Solutions B.V., 7575 BK Oldenzaal (NL)
(72) Inventor: Keizers, Jurgen Hendrik Peter Joseph, 7582 GH Losser (NL)
(74) Representative: 't Jong, Bastiaan Jacob

(56) References cited:
- EP-A1- 2 374 948
- WO-A1-2011/057627
- DE-U1-202009 009 117
- JP-A- 2004 244 816
- US-A- 4 067 072

## Description

The invention relates to a drain assembly according to the preamble of claim 1.

Such a drain assembly is known from publication DE 20 2009 009117 U1.

A similar drain assembly is disclosed also by publication US 4,067,072.

In the case of elongate drains, such as a shower drain or gutter, which have to be incorporated in the floor it is important for the drain to be set to the correct height and optionally provided with a slope. It is known to provide the drain with adjustable feet in order to thus set the drain to the correct height before arranging the floor.

The range of the adjusting height is limited because the adjustable feet are usually placed under the drain. It is therefore usual in the prior art to provide adjustable foot parts of different lengths so that the drain can be adjusted in the height over a greater range. The drawback is however that different parts remain unused after installation of the drain. In addition, it is not clear to the installer whether different parts should have been used during the installation of the drain.

An adjustable foot can on the other hand also be sawn to length, although parts are then also left over. In addition, it is important to measure everything properly before the adjustable foot is sawn to length. This is because, if a measuring error is made, the sawn-off part may be given the wrong length, whereby it becomes unusable.

It is further known to mount drains on an adjoining wall. It is known for this purpose to fix a wall bracket to the drain from above and to remove this bracket again once the floor has been arranged. The drawback in this known embodiment is that holes have to be drilled above the drain in order to suspend the drain. This part of the wall is often provided with a watertight layer. This watertight layer is broken through by drilling holes.

It is also common for the wall to be provided with a partial tile layer. It is undesirable to drill holes therein for the purpose of suspending the drain.

In addition, there must be arranged on the drain a provision on which the brackets can be mounted and with which it is also possible to remove the brackets again afterward.

It is particularly difficult to arrange a suspended drain at the correct level in the case of a yielding ground surface, such as a plank floor or a foam ground surface. This is because, as soon as the concrete floor or cement layer is poured, the ground surface will yield and the distance between the drain and the ground surface will change.

It is now an object of the invention to reduce or even obviate the above stated drawbacks.

This object is achieved according to the invention with a drain assembly according to the preamble, which is characterized in that the first adjusting means comprises a screw thread running in a first direction and the second adjusting means comprises a screw thread running in a second direction, wherein the first and the second directions are opposite.

By providing for instance the first and second foot parts with a left-hand screw thread and the second and third foot parts with a right-hand screw thread it becomes possible to substantially double the adjustment range. When the second part is rotated while the first and third foot parts are held in place, all three foot parts will slide telescopically out of each other. Due to the left-hand screw thread and right-hand screw thread the height of the adjustable foot can be set more quickly, while double the adjustment range is moreover obtained.

Instead of a screw thread it is also possible, by a solution not forming part of the claimed subject-matter, to use a bayonet fastening. A non-round shape with a number of parallel ribs is also possible in a solution not forming part of the claimed subject-matter. The two parts are here inserted into each other and, by rotating the parts relative to each other, the ribs of the two parts are pressed into each other whereby the parts are fixed relative to each other.

Another preferred embodiment of the drain assembly according to the invention further comprises a base plate to which the distal foot part of the adjustable foot can be secured in order to prevent rotation of the foot part.

Using the base plate one of the foot parts can easily be secured against rotation. This simplifies the outward or inward rotation of the adjustable foot since the lower foot part no longer need be held in place.

An operating ring is preferably arranged around the second foot part. This operating ring provides for an increase in the diameter, whereby the second foot part can be rotated more easily. Owing to the operating ring more force can be exerted for the purpose of rotation and the rotation can further be performed more accurately.

In yet another embodiment of the drain assembly according to the invention the first foot part is arranged on the support surface and provided with an internal screw thread, and wherein the device further comprises a wall bracket engaging round the first foot part.

Because the wall bracket engages round the first foot part and the first foot part is arranged on the support surface, a firm mounting of the wall bracket on the support surface is thus obtained, while the adjustable foot still remain mounted on the support surface.

The wall bracket preferably comprises an internal screw thread which is the same as that of the first foot part and on which the second foot part can also engage.

Providing the wall bracket with an internal screw thread the same as that of the first foot part enables the wall bracket to displace relative to the first foot part and then to be fixed at distance by screwing in the second foot part. It is thus possible to compensate for inaccuracies in the mounting of the wall bracket on the wall. It also remains possible to adjust the height of the adjustable foot after mounting of the wall bracket and placing of the adjustable foot.

In yet another preferred embodiment of the drain assembly according to the invention the wall bracket comprises a wall plate provided with at least one fastening hole, wherein the distance between the at least one fastening hole and the lower edge of the wall plate corresponds to the distance in the mounted position between the at least one fastening hole and the upper edge of the drain arranged on the support surface.

This wall plate according to the invention has the advantage that the desired height of the drain can first be marked on the wall. The fastening hole can then be marked by holding the underside of the wall plate at the marked height. This ensures that the wall plate, and thereby the wall bracket, are suspended at the correct height on the wall.

The advantage of this embodiment is that only one measurement need be made, this being the height at which the drain must come to hang. Using the wall bracket according to the invention the position for the fastening holes can then be determined easily and without measuring. Errors are hereby prevented.

A sound-insulating layer is preferably arranged on at least the support surface. This sound-insulating layer prevents sound from water falling on the drain and vibrations being transmitted to the adjustable foot.

The sound-insulating layer can further be provided with an adhesive layer with which a drain can for instance be attached to the adjustable foot.

The sound-insulating layer can also be arranged in a foot part, for instance between the screw thread and the body of the foot part.

The adjustable foot according to the invention is used for height adjustment of a drain, but can also be used for height adjustment of for instance a build-in reservoir, shower tray or bath.

In addition, it will be self-evident that, instead of a supporting force, a pulling force can also be exerted with the adjustable foot which can for instance be used to clamp an object fixedly on a ground surface.

In yet another embodiment of the drain assembly according to the invention at least one of the foot parts is provided with a peripheral groove which lies deeper than the screw thread in order to enable simple shortening of the foot part. Making the groove deeper than the screw thread makes it possible to saw through the foot part easily without the screw thread being damaged and screwing-in of the shortened part being impeded. The minimum height of the adjustable foot can be adapted to the specific conditions by providing for instance the lower part of the adjustable foot with a number of parts which can be shortened. It will be self-evident that the shortening can take place with foot parts having either an external screw thread and/or an internal screw thread.

It is hereby possible to achieve an even greater adjustment range.

These and other features of the invention are further elucidated with reference to the accompanying drawings.
Figure 1 is a perspective view of a first embodiment of the device according to the invention.
Figure 2 is a perspective view of a variant of the embodiment according to figure 1.
Figure 3 shows the wall bracket of the embodiment according to figure 2.
Figure 4 is a front view of the wall bracket of figure 3.
Figures 5A, 5B and 5C show the embodiment according to figure 1 in three different positions.
Figure 6 shows a third embodiment according to the invention.
Figure 7 shows a fourth example, not forming part of the claimed subject-matter.
Figure 8 shows a fifth example, not forming part of the claimed subject-matter.

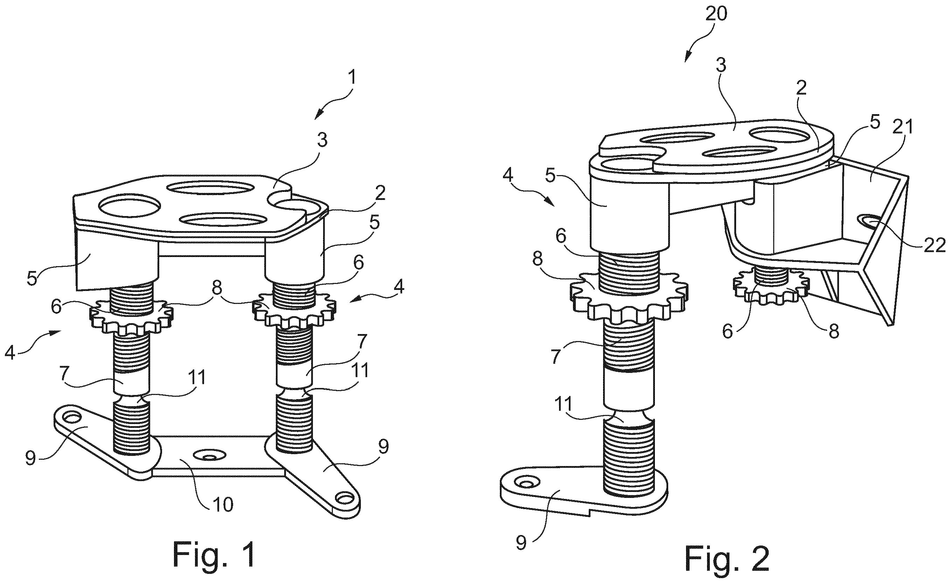

Figure 1 is a perspective view of an embodiment 1 according to the invention. This embodiment 1 has a support surface 2 on which a layer of sound-insulating material 3 is arranged. A drain (not shown) can be placed hereon.

Two adjustable feet 4 are arranged on the underside of support surface 2. Each adjustable foot 4 has a first foot part 5 arranged fixedly on support surface 2, and a second foot part 6 which slides in first foot part 5. A third foot part 7 further slides in the second foot part 6.

The outer periphery of second foot part 6 and the inner side of first foot part 5 are provided with a right-hand screw thread. The inner side of second foot part 6 and third foot part 7 are provided with a left-hand screw thread.

Further provided on second foot part 6 is an operating ring 8 with which the second foot part 6 can be rotated and with which the length of adjustable foot 4 can be set by the telescopic action of foot parts 5, 6, 7 and the left-hand and right-hand screw threads.

The third foot part 7 is provided on the underside with a fixing protrusion 9 with which the third foot part 7 can be arranged fixedly on the ground surface. Further provided is a base plate 10 with which the third foot parts 7 can likewise be secured and locked. Fixing protrusions 9 or base plate 10 can be used as desired and depending on the circumstances.

Another locking with which the third foot parts 7 can be locked relative to first foot parts 5 can also be provided instead of base plate 10.

Third foot part 7 is further provided with a peripheral groove 11. This peripheral groove 11 makes it possible to shorten foot part 7 without the screw thread being damaged. After shortening, the lower part of third foot part 7 can be screwed into second foot part 6.

Figure 2 shows a variant 20 of the embodiment according to figure 1. The same parts are designated with the same reference numerals.

In this embodiment 20 only one adjustable foot 4 is provided. On the other side a wall plate 21 is arranged around a first foot part 5. This wall plate 21 has fastening holes 22 with which wall plate 21 can be fixed.

A second foot part 6 is screwed in from the underside. A fixed distance of the wall plate relative to support surface 2 can hereby be set.

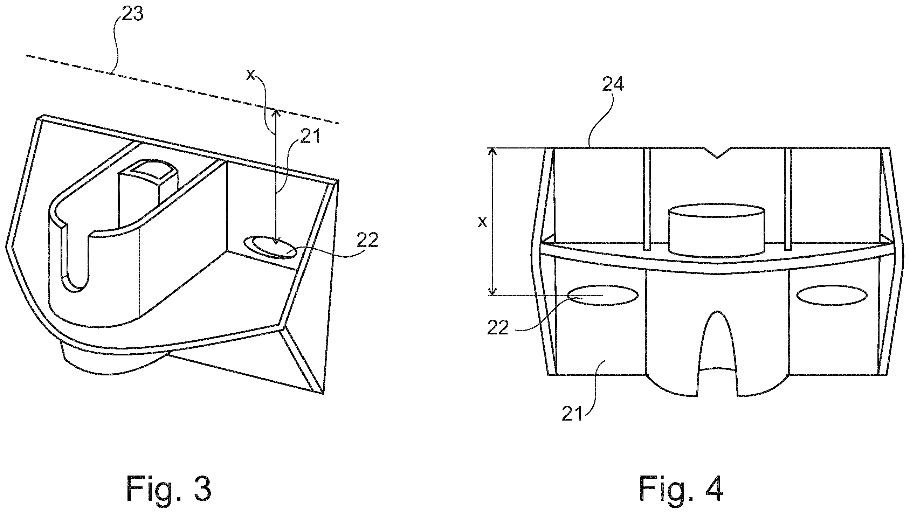

Figure 3 shows wall plate 21 separately. Further indicated above wall plate 21 with broken line 23 is the height at which the upper edge of a drain resting on the device according to the invention will come to lie. In order to now determine the distance x to the fastening hole, wall plate 21 can be turned over as shown in figure 4. The distance between the fastening holes and lower edge 24 of the wall plate is equal to the distance x. The correct position of for instance plugs in the wall can hereby thus be determined in simple manner.

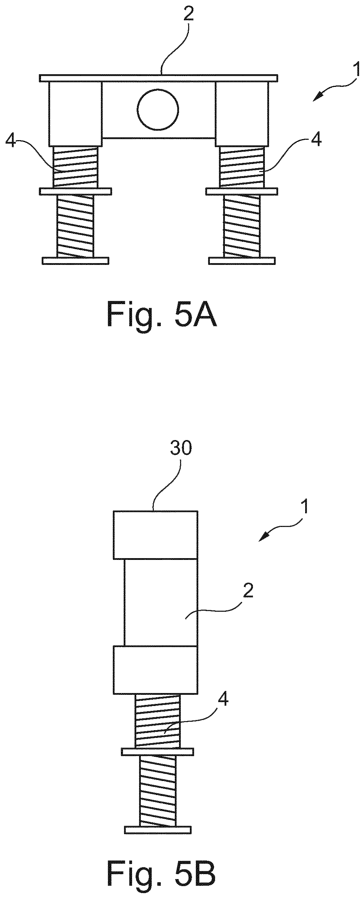

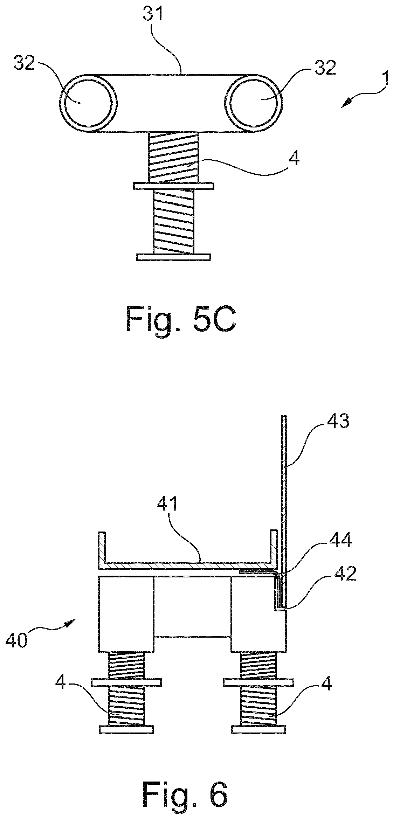

Figures 5a, 5B and 5C show embodiment 1 according to figure 1 in three different positions. In figure 5A the device 1 is placed horizontally, wherein support surface 2 support a shower drain. Device 1 is further provided in this position with two adjustable feet 4.

In figure 5B the upper part of the device has been placed upright, whereby a side surface 30 becomes the support surface. An adjustable foot 4 is now further arranged on the side. A great increase in the adjustment range can be obtained by tilting the upper part.

In figure 5C the upper part of the device is likewise placed upright, though now rotated through a different axis, whereby surface 31 forms the support surface. This figure 5C further shows openings 32 into which the adjustable foot parts 4 are placed in the embodiment according to figure 5A.

Figure 6 shows a third embodiment 40 according to the invention. This embodiment 40 is provided with two adjustable feet 4 as explained with respect to figure 1. A shower drain 41 is arranged on device 40.

Further provided in device 40 is a recess 42 in which the edge of a vertical plate 43 can be accommodated. Vertical plate 43 is connected via a flexible strip 44 to shower drain 41.

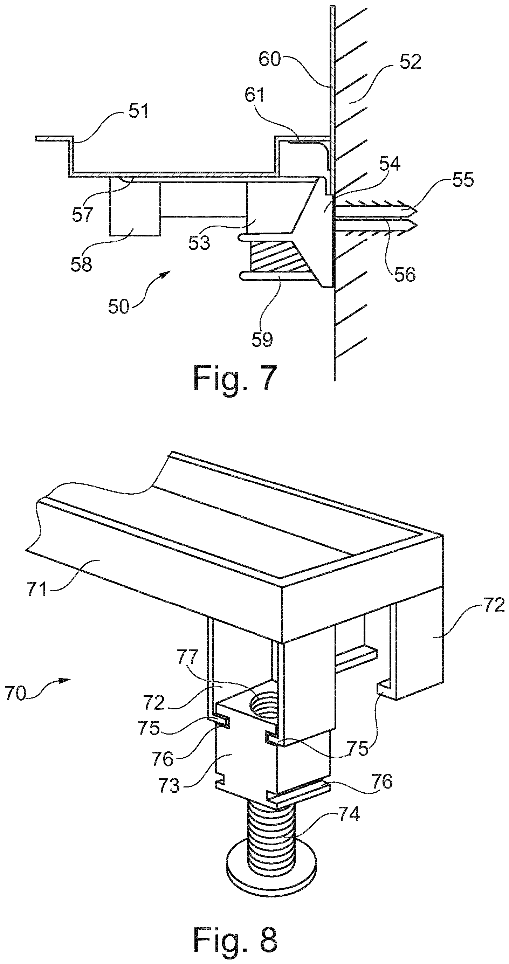

Figure 7 shows a fourth example 50. This example 50 has similarities to the embodiment according to figure 6.

A shower drain 51 is arranged on adjustable foot 50. This adjustable foot 50 is mounted on a wall 52 by means of a wall bracket 53. Wall bracket 53 has a wall plate 54 which is fixed to wall 52 by means of a screw 56 and a plug 55.

Adjustable foot 50 has a support surface 57 on which shower drain 51 rests. On this support surface 57 is arranged a height-adjustable foot formed by parts 58, 59 and 53.

In this example support surface 57 can be adjusted in the height by holding the two parts 58 and 53 in the correct position relative to each other and then screwing in part 59.

Provided in wall plate 54 is a recess in which is placed a vertical plate 60 which is connected via a flexible part 61 to shower drain 62.

Figure 8 shows a fifth example 70 of a device not forming part of the claimed subject-matter. This example 70 is arranged under a shower drain 71 and has three adjustable foot parts 72, 73, 74.

Part 72 consists of two plate parts with flanges 75. These flanges 75 are inserted into grooves 76 of the second block-like foot part 73. A number of grooves 76 forming adjusting means are arranged on the block-like foot part 73, whereby the height of part 73 can be adjusted relative to part 72.

Further arranged in block-like part 73 is a hole 77 provided with screw thread into which is inserted a threaded end 74. The height of foot part 74 can be set relative to part 73 by rotating foot part 74, i.e. threaded end 74.

## Claims

1. Drain assembly, comprising:
- a drain (41), such as a shower drain (41), to be incorporated in a floor;
- a device (1; 20; 40) for height adjustment of the drain (41), comprising:
* a support surface (2; 30; 31) for supporting the drain (41); and
* at least one height-adjustable foot (4; 50) arranged on the support surface (2; 30; 31) for adjusting the height of the drain (41)
wherein the at least one adjustable foot comprises at least three foot parts (5; 6; 7) sliding telescopically into each other, wherein a first (5) and a second (6) foot part are provided with co-acting first adjusting means and wherein the second (6) and third (7) foot parts are provided with co-acting second adjusting means,
**characterized in that**
the first adjusting means comprises a screw thread running in a first direction and wherein the second adjusting means comprises a screw thread running in a second direction, wherein the first and the second directions are opposite.

2. Drain assembly as claimed in claim 1, wherein at least one of the foot parts (5; 6; 7) is provided with a peripheral groove (11) which lies deeper than the screw thread in order to enable simple shortening of the foot part (5; 6; 7) .

3. Drain assembly as claimed in any of the foregoing claims, further comprising a base plate (10) to which the distal foot part (7) of the adjustable foot (4) can be secured in order to prevent rotation of the foot part (7).

4. Drain assembly as claimed in any of the foregoing claims, wherein an operating ring (8) is arranged around the second foot part (6).

5. Drain assembly as claimed in any of the foregoing claims, wherein the first foot part (5) is arranged on the support surface (2; 30; 31) and provided with an internal screw thread, and wherein the device (20) further comprises a wall bracket (21) engaging round the first foot part (5).

6. Drain assembly as claimed in claim 5, wherein the wall bracket (21) comprises an internal screw thread which is the same as that of the first foot part and on which the second foot part can also engage.

7. Drain assembly as claimed in claim 5 or 6, wherein the wall bracket (21) comprises a wall plate (21) provided with at least one fastening hole (22), wherein the distance between the at least one fastening hole (22) and the lower edge of the wall plate (21) corresponds to the distance in the mounted position between the at least one fastening hole (22) and the upper edge of the drain (41; 51) arranged on the support surface (2; 30; 31).

8. Drain assembly as claimed in any of the foregoing claims, wherein a sound-insulating layer (3) is arranged on at least the support surface (2).

## Patentansprüche

1. Ablaufanordnung, umfassend:
- einen Ablauf (41), wie zum Beispiel einen Duschablauf (41), der in einen Boden eingebaut werden soll;
- eine Vorrichtung (1; 20; 40) zur Höhenverstellung des Ablaufs (41), umfassend:
* eine Stützfläche (2; 30; 31) zum Stützen des Ablaufs (41); und
* mindestens einen höhenverstellbaren Fuß (4; 50), der auf der Stützfläche (2; 30; 31) zum Verstellen der Höhe des Ablaufs (41) angeordnet ist,
wobei der mindestens eine verstellbare Fuß mindestens drei Fußteile (5; 6; 7) umfasst, die teleskopartig ineinander gleiten, wobei ein erstes (5) und ein zweites (6) Fußteil mit zusammenwirkenden ersten Einstellmitteln bereitgestellt sind und wobei das zweite (6) und das dritte (7) Fußteil mit zusammenwirkenden zweiten Einstellmitteln bereitgestellt sind,
**dadurch gekennzeichnet, dass**
das erste Einstellmittel ein Schraubengewinde umfasst, das in einer ersten Richtung verläuft, und wobei das zweite Einstellmittel ein Schraubengewinde umfasst, das in einer zweiten Richtung verläuft, wobei die erste und die zweite Richtung entgegengesetzt sind.

2. Ablaufanordnung nach Anspruch 1, wobei mindestens eines der Fußteile (5; 6; 7) mit einer Umfangsnut (11) bereitgestellt ist, die tiefer als das Schraubengewinde liegt, um eine einfache Verkürzung des Fußteils (5; 6; 7) zu ermöglichen.

3. Ablaufanordnung nach einem der vorstehenden Ansprüche, weiter umfassend eine Basisplatte (10), an der das distale Fußteil (7) des verstellbaren Fußes (4) gesichert werden kann, um eine Drehung des Fußteils (7) zu verhindern.

4. Ablaufanordnung nach einem der vorstehenden Ansprüche, wobei ein Betätigungsring (8) um das zweite Fußteil (6) herum angeordnet ist.

5. Ablaufanordnung nach einem der vorstehenden Ansprüche, wobei das erste Fußteil (5) auf der Stützfläche (2; 30; 31) angeordnet ist und mit einem Innenschraubengewinde bereitgestellt ist, und wobei die Vorrichtung (20) weiter eine Wandhalterung (21), die um den ersten Fußteil (5) in Eingriff gebracht wird, umfasst.

6. Ablaufanordnung nach Anspruch 5, wobei die Wandhalterung (21) ein Innenschraubengewinde umfasst, das dem des ersten Fußteils entspricht und in welches das zweite Fußteil ebenfalls in Eingriff gebracht werden kann.

7. Ablaufanordnung nach Anspruch 5 oder 6, wobei die Wandhalterung (21) eine Wandplatte (21) umfasst, die mit mindestens einem Befestigungsloch (22) bereitgestellt ist, wobei der Abstand zwischen dem mindestens einen Befestigungsloch (22) und dem unteren Rand der Wandplatte (21) dem Abstand in der montierten Position zwischen dem mindestens einen Befestigungsloch (22) und dem oberen Rand des Ablaufs (41; 51) entspricht, der auf der Stützfläche (2; 30; 31) angeordnet ist.

8. Ablaufanordnung nach einem der vorstehenden Ansprüche, wobei ein Schalldämmschicht (3) an der mindestens einen Stützfläche (2) angeordnet ist.

## Revendications

1. Ensemble drain, comprenant :
- un drain (41), tel qu'un drain de douche (41), devant être incorporé dans un sol ;
- un dispositif (1 ; 20 ; 40) pour le réglage en hauteur du drain (41), comprenant :
* une surface de support (2 ; 30 ; 31) pour supporter le drain (41) ; et
* au moins un pied réglable en hauteur (4; 50) agencé sur la surface de support (2 ; 30 ; 31) pour régler la hauteur du drain (41),
dans lequel l'au moins un pied réglable comprend au moins trois parties de pied (5 ; 6; 7) coulissant télescopiquement les unes dans les autres, dans lequel une première (5) et une deuxième (6) partie de pied sont pourvues de premiers moyens de réglage agissant conjointement et dans lequel les deuxième (6) et troisième (7) parties de pied sont pourvues de seconds moyens de réglage agissant conjointement,
**caractérisé en ce que**
les premiers moyens de réglage comprennent un pas de vis allant dans une première direction et dans lequel les seconds moyens de réglage comprennent un pas de vis allant dans une seconde direction, dans lequel les première et seconde directions sont opposées.

2. Ensemble drain selon la revendication 1, dans lequel au moins une des parties de pied (5 ; 6 ; 7) est pourvue d'une gorge périphérique (11) qui est plus profonde que le pas de vis afin de permettre un simple raccourcissement de la partie de pied (5 ; 6 ; 7).

3. Ensemble drain selon l'une quelconque des revendications précédentes, comprenant en outre une plaque de base (10) à laquelle peut être fixée la partie de pied distale (7) du pied réglable (4) afin d'empêcher la rotation de la partie de pied (7).

4. Ensemble drain selon l'une quelconque des revendications précédentes, dans lequel un anneau d'actionnement (8) est agencé autour de la deuxième partie de pied (6).

5. Ensemble drain selon l'une quelconque des revendications précédentes, dans lequel la première partie de pied (5) est agencée sur la surface de support (2, 30, 31) et pourvue d'un pas de vis interne, et dans lequel le dispositif (20) comprend en outre un support mural (21) en prise autour de la première partie de pied (5).

6. Ensemble drain selon la revendication 5, dans lequel le support mural (21) comprend un pas de vis interne qui est identique à celui de la première partie de pied et sur lequel peut également se mettre en prise la deuxième partie de pied.

7. Ensemble drain selon la revendication 5 ou 6, dans lequel le support mural (21) comprend une plaque murale (21) pourvue d'au moins un trou de fixation (22), dans lequel la distance entre l'au moins un trou de fixation (22) et le bord inférieur de la plaque murale (21) correspond à la distance dans la position montée entre l'au moins un trou de fixation (22) et le bord supérieur du drain (41 ; 51) agencé sur la surface de support (2 ; 30 ; 31).

8. Ensemble drain selon l'une quelconque des revendications précédentes, dans lequel une couche d'isolation phonique (3) est agencée sur au moins la surface de support (2).
